# FASCICULE DE BREVET EUROPEEN

(11) **EP 2 170 136 B1**
(45) Date de publication et mention de la délivrance du brevet: **10.11.2010**
(21) Numéro de dépôt: 08828921.0
(22) Date de dépôt: 16.07.2008
(51) Int. Cl.: A47J 36/02, A47J 27/022

(54) **ARTICLE CULINAIRE EN FONTE D' ALUMINIUM COMPATIBLE AVEC UN CHAUFFAGE PAR INDUCTION ET PROCÉDÉ DE FABRICATION**
INDUKTIONSERWÄRMUNGSKOMPATIBLES KOCHINSTRUMENT AUS GUSSALUMINIUM UND VERFAHREN ZU SEINER HERSTELLUNG
COOKING UTENSIL MADE FROM CAST ALUMINIUM COMPATIBLE WITH INDUCTION HEATING AND METHOD FOR PRODUCTION

(30) Priorité: 25.07.2007 FR 0705435
(43) Date de publication de la demande: 07.04.2010
(73) Titulaire: Seb S.A., 69130 Ecully (FR)
(72) Inventeur: BONNEL, Jocelyn, F-73310 Vions (FR)
(74) Mandataire: Lemoine, Jean-Sébastien
(86) Numéro de dépôt international: PCT/FR2008/001050
(87) Numéro de publication internationale: WO 2009/030839

(56) Documents cités:
- EP-A- 0 324 061
- WO-A-2004/078010
- GB-A- 2 179 239
- US-A- 6 073 545

## Description

La présente invention concerne un article culinaire dont le fond présente, en face extérieure inférieure, un fond rapporté recouvrant au moins partiellement le fond de l'article. L'article culinaire est typiquement constitué de fonte d'aluminium et le fond rapporté est un fond multicouche qui rend l'article compatible avec un chauffage par induction. La manière de fabriquer l'article avec son fond rapporté est également concernée.

Par fonte d'aluminium (ou alliage d'aluminium de fonderie), on entend, au sens de la présente invention, un alliage dont le constituant principal est l'aluminium et qui est destiné à être transformé par des techniques de fonderie.

A partir de US 6,073,545, on connaît un article culinaire qui comporte un récipient ayant une paroi circulaire latérale et une paroi de fond, ainsi qu'un fond rapporté disposé sous la paroi de fond. Ce fond rapporté peut comporter deux plaques qui se répartissent comme suit :
- une plaque intermédiaire comprenant un matériau métallique et des composants céramiques, cette plaque intermédiaire étant assemblée à la paroi de fond de l'article par brasage tendre, et éventuellement
- une plaque externe en un matériau ferritique ou austénitique, qui est assemblée également par brasage tendre à la plaque intermédiaire du fond rapporté.

L'article culinaire de US 6,073,545 est rendu compatible avec un chauffage par induction soit par l'utilisation de fer dans la plaque intermédiaire, soit par la plaque externe soudée à la plaque intermédiaire, à condition toutefois que la plaque externe soit en un matériau ferritique. La plaque intermédiaire est une structure composite métal-céramique obtenue par un procédé de forgeage liquide (« squeeze casting ») comprenant la solidification sous très haute pression du matériau métallique à l'état liquide, après imprégnation d'une préforme en céramique disposée dans un moule. Le procédé de fabrication de US 6,073,545 présente donc des difficultés de mise en oeuvre liées à la nature de la plaque intermédiaire.

On connaît de WO 2004/078010 un ustensile de cuisson en aluminium ou en alliage d'aluminium, compatible avec un chauffage par induction, et dont la face extérieure du fond est munie d'une plaque métallique intermédiaire, sur laquelle une plaque ferromagnétique, notamment en acier ferritique, est brasée à l'aide d'une brasure ayant une température de fusion relativement élevée de l'ordre de 540 à 560°C, tel que le cuivre, le laiton, le bronze ou l'étain. La plaque métallique intermédiaire est déposée sur la face extérieure du fond par pulvérisation par gaz froid, ce qui est une technologie complexe, difficile à mettre en oeuvre.

En plus des brasures mentionnées ci-dessus, on utilise traditionnellement dans le domaine des articles culinaires des brasures en alliage d'aluminium, notamment à 12% de silicium. Une telle brasure a un intervalle de fusion compris entre 570 et 595°C.

Or, dans le cas d'articles culinaires comprenant une calotte en fonte d'aluminium, une telle brasure serait de la même nature que la calotte et aurait donc une température de fusion sensiblement proche de celle de la calotte, de sorte que la calotte serait endommagée lors d'un brasage avec une telle brasure.

En outre, pour braser un acier inoxydable sur un support métallique, il faut typiquement atteindre des températures très élevées, d'au moins 600°C.

Un but de la présente invention vise à pallier tout ou partie de ces inconvénients.

Un autre but est de rendre un article culinaire en fonte d'aluminium compatible avec un chauffage par induction.

Pour tendre vers cela, la présente invention propose un article culinaire compatible avec un chauffage par induction comprenant :
- une calotte métallique présentant une paroi de fond pour l'article, et
- un fond rapporté compatible avec un chauffage par induction, qui est disposé sous ladite calotte métallique, localement à l'endroit de sa paroi de fond, ledit fond rapporté comportant :
- une première couche recouvrant au moins partiellement ladite paroi de fond, et
- une deuxième couche en un matériau compatible avec un chauffage par induction, recouvrant ladite première couche,
**caractérisé en ce que** ladite calotte est en fonte d'aluminium, et
en ce que ladite première couche est en un matériau apte à être soudé sur de la fonte d'aluminium à une température égale ou inférieure à 500°C, la première couche étant liée à la paroi de fond par une brasure à bas point de fusion.

Avantageusement, la première couche (31) est en un matériau présentant une conductivité thermique égale ou supérieure à 100 W.m⁻¹.K⁻¹, et de préférence égale ou supérieure à 150 W.m⁻¹.K⁻¹. Si la première couche est réalisée avec un tel matériau, cela permet un chauffage par induction plus homogène de l'article culinaire.

Comme matériau apte à être brasé sur de la fonte d'aluminium, on conseille le cuivre et certains alliages d'aluminium.

Parmi ces alliages d'aluminium susceptibles d'être utilisés dans l'article culinaire selon l'invention, on conseille :
- des aluminiums « purs » à 99% d'aluminium de la série 1XXX : alliages 1050, 1100, 1200 et 1350 ;
- des alliages d'aluminium et de manganèse de la série 3XXX : alliages 3003, 3004, 3105 et 3005,
- des alliages d'aluminium et de magnésium de la série 5XXX : alliages 5005, 5050 et 5052 ;
- des alliages d'aluminium, silicium et magnésium de la série 6XXX : alliages 6053, 6060, 6063, 6101 et 6951,
les séries 1XXX, 3XXX, 5XXX et 6XXX mentionnées ci-dessus provenant de la classification des alliages d'aluminium établie par l'Aluminium Association Inc ».

Comme brasure (ou matériau d'apport de soudage) à bas point de fusion, on conseille un alliage Zn-Al, par exemple un alliage à 98% de zinc et 2% d'aluminium.

Si la deuxième couche du fond rapporté est fixée à la première couche par brasage, il s'agit d'un brasage dur utilisant une brasure à point de fusion élevé.

Comme brasure (ou matériau d'apport de soudage) à point de fusion élevé, on peut choisir une fonte d'aluminium à 12% de silicium (par exemple l'alliage AS12).

Toutefois, le fond rapporté pourra aussi être constitué par des couches colaminées, l'une de ces couches étant une couche en un matériau susceptible d'être brasé sur de la fonte d'aluminium et l'autre couche étant une couche d'un matériau compatible avec un chauffage par induction.

A titre de matériau compatible avec un chauffage par induction, on conseille les matériaux ferromagnétiques, et en particulier les aciers inoxydables ferritiques.

La première couche du fond rapporté peut être d'épaisseur, de forme et de taille quelconque, car cette couche a essentiellement pour fonction de permettre la fixation de la deuxième couche du fond rapporté sur la paroi de fond de l'article.

De manière avantageuse, l'épaisseur de la première couche du fond rapporté est comprise entre 1 et 3 mm. En fait, l'épaisseur de la première couche dépend de la nature du matériau qui la constitue, et plus exactement de sa conductivité thermique.

Ainsi, dans le cas d'une première couche en cuivre, dont la conductivité thermique est de l'ordre de 400 W. m⁻¹. K⁻¹, l'épaisseur de cette couche sera de préférence de l'ordre de 1 mm, une telle épaisseur étant suffisante pour permettre un chauffage par induction homogène de l'article, tout en étant suffisamment faible pour limiter la durée de chauffage.

Dans le cas d'une première couche en aluminium ou en alliage d'aluminium ayant une conductivité thermique comprise entre 100 et 235 W.m⁻¹. K⁻¹ (pour l'aluminium pur), l'épaisseur de cette couche sera de préférence comprise entre 2 et 3 mm, c'est-à-dire une épaisseur plus élevée que dans le cas d'une première couche en cuivre, pour compenser une conductivité thermique plus faible que celle du cuivre.

En ce qui concerne la deuxième couche du fond rapporté, qui est la couche destinée à être en contact avec la plaque à induction, celle-ci présentera avantageusement une épaisseur comprise entre 0,4 et 1 mm.

Toutefois, il s'est révélé qu'une épaisseur de deuxième couche de l'ordre de 0,6 mm permet un réchauffement par induction suffisant.

La présente invention a également pour objet un procédé de fabrication d'un article culinaire selon l'invention.

Plus particulièrement, il s'agit d'un procédé de fabrication d'un fond renforcé d'article culinaire, **caractérisé en ce qu**'il comporte les étapes suivantes :
- fournir une forme en fonte d'aluminium ;
- fournir une première plaque en un matériau apte à être brasé sur de la fonte d'aluminium à une température égale ou inférieure à 500°C ;
- fournir une deuxième plaque en un matériau compatible avec un chauffage par induction ;
- assembler la première plaque avec la deuxième plaque pour former un bloc ;
- assembler ledit bloc par brasage tendre dudit matériau apte à être brasé sur de la fonte d'aluminium avec la paroi de fond de la calotte, à l'aide d'une brasure à bas point de fusion.

Par brasage tendre, on entend un brasage à l'aide d'un métal ou d'un alliage métallique d'apport (ou brasure) à bas point de fusion, égal ou inférieur à 500°C.

Sans exclure d'autres modes de réalisation possibles, il est ici prévu que la forme soit une calotte, intégrant un fond.

D'autres avantages et particularités résulteront de la description qui va suivre, donnée à titre d'exemple non limitatif et faite en référence aux figures annexées.
- la figure 1 représente une vue schématique en coupe d'un article culinaire conforme à certains aspects de l'invention selon un premier mode de réalisation,
- la figure 2 montre des étapes de mise en oeuvre du procédé de fabrication d'un fond renforcé selon l'invention pour l'article culinaire de la figure 1,
- la figure 3 représente une vue schématique en coupe d'un article culinaire conforme à certains aspects de l'invention selon un deuxième mode de réalisation,
- la figure 4 montre des étapes de mise en oeuvre du procédé de fabrication d'un fond renforcé selon l'invention pour l'article culinaire de la figure 3.

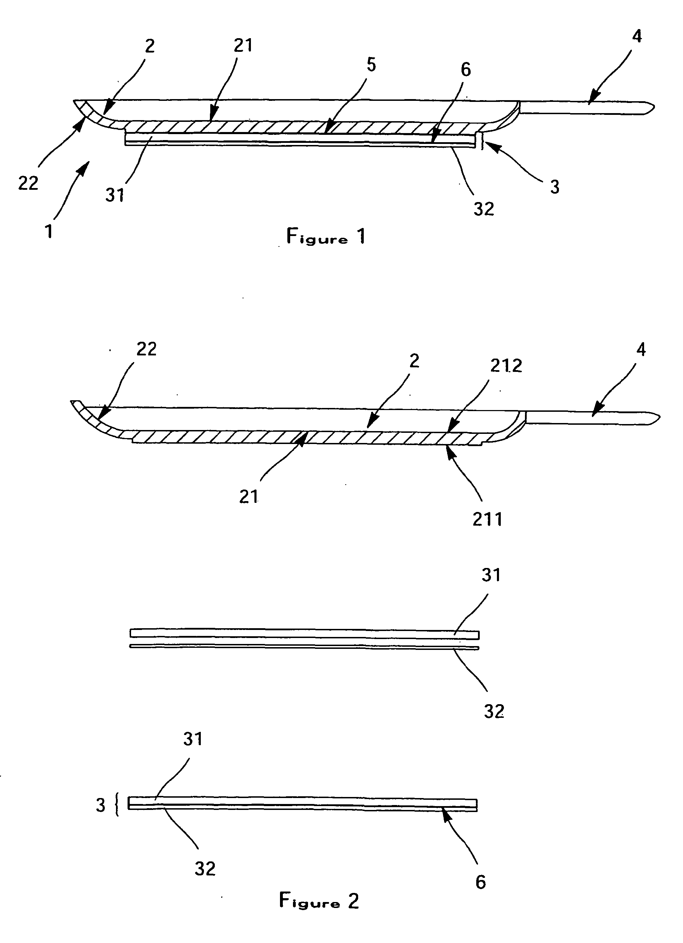

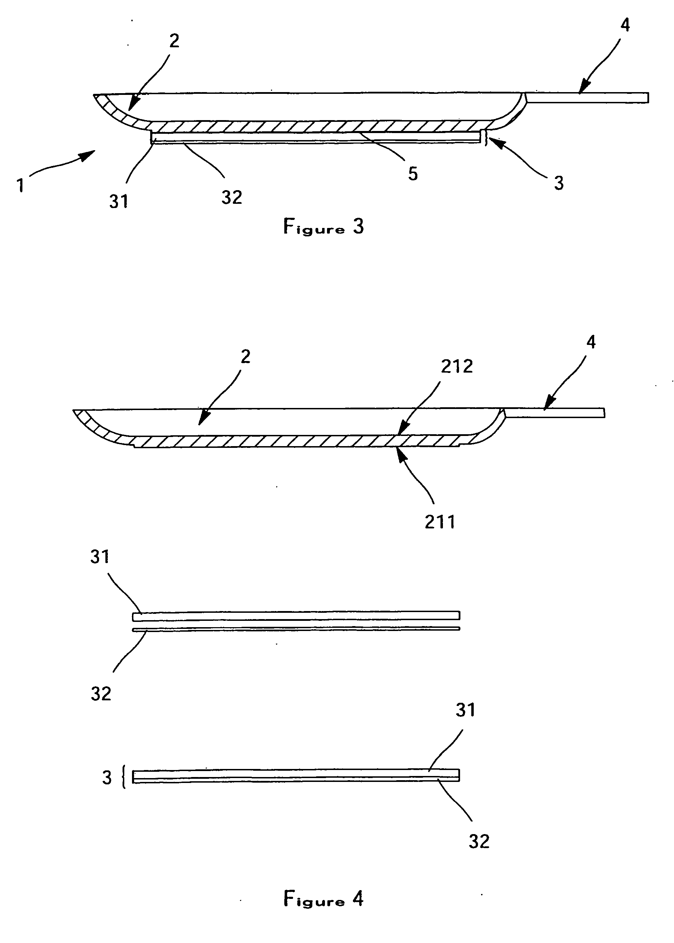

Sur les figures 1 et 3, on a représenté, à titre d'exemple d'article culinaire une casserole 1 qui comprend :
- une calotte 2 en fonte d'aluminium,
- un fond rapporté 3 compatible avec un chauffage par induction, et
- une poignée de préhension 4.

La calotte 2 définit une paroi de fond 21 et une paroi latérale 22 s'élevant à partir de ladite paroi de fond 21.

Les figures 2 et 4 représentent des étapes de mise en oeuvre du procédé de fabrication d'un fond renforcé pour les articles représentés sur les figures 1 et 3 respectivement. D'après ces figures, le fond 21 présente :
- une face intérieure 212 destinée à la cuisson des aliments, et
- une face extérieure 211, qui est destinée à être disposée du côté d'une source de chaleur, par exemple une plaque à induction.

Ce fond rapporté 3 comporte :
- une première couche 31 en un matériau brasable sur de la fonte d'aluminium à une température inférieure à 500°C, notamment un alliage d'aluminium tel que le 1050 ou le 1200, et
- une deuxième couche 32 en acier inoxydable ferritique.

D'après les figures 1 et 3, la première couche 31 du fond rapporté 3 est soudée à la paroi de fond 21 de la calotte 2 par un brasage tendre à l'aide d'une brasure 5 à bas point de fusion.

Les figures 2 et 4 montrent que le fond rapporté 3 est un bloc, qui est obtenu en assemblant une première plaque 31 en un matériau brasable sur de la fonte d'aluminium à une température inférieure à 500°C, avec une deuxième plaque 32 en acier inoxydable ferritique.

Sur le mode de réalisation représenté sur les figures 1 et 2, le bloc 3 est obtenu en soudant la première plaque 31 à la deuxième plaque 32 par un brasage dur à l'aide d'une brasure 6 à haut point de fusion.

Par brasage dur (ou traditionnel), on entend un brasage à l'aide d'un métal ou d'un alliage métallique d'apport (ou brasure) à point de fusion élevé, supérieur à 500°C.

Sur le mode de réalisation représenté sur les figures 3 et 4, le bloc 3 est obtenu par colaminage des première 31 et deuxième plaques 32.

## Revendications

1. Article culinaire (1) compatible avec un chauffage par induction comprenant :
- une calotte (2) métallique présentant une paroi de fond (21) pour l'article (1), et
- un fond rapporté (3) compatible avec un chauffage par induction, qui est disposé sous ladite calotte métallique (2), localement à l'endroit de sa paroi de fond (21), ledit fond rapporté (3) comportant :
- une première couche (31) recouvrant au moins partiellement ladite paroi de fond (21), et
- une deuxième couche (32) en un matériau compatible avec un chauffage par induction, recouvrant ladite première couche (31),
**caractérisé en ce que** ladite calotte (2) est en fonte d'aluminium, et
**en ce que** ladite première couche (31) est en un matériau apte à être soudé sur de la fonte d'aluminium à une température égale ou inférieure à 500°C, ladite première couche (31) étant liée à la paroi de fond (21) par une brasure (5) à bas point de fusion.

2. Article culinaire (1) selon la revendication 1, **caractérisé en ce que** la première couche (31) est en un matériau présentant une conductivité thermique égale ou supérieure à 100 W.m⁻¹.K⁻¹.

3. Article culinaire (1) selon la revendication 1 ou 2, **caractérisé en ce que** la première couche (31) est en un matériau choisi parmi le cuivre et les alliages d'aluminium.

4. Article culinaire (1) selon la revendication 3, **caractérisé en ce que** le matériau constitutif de la première couche (31) du fond rapporté (3) est un alliage d'aluminium choisi dans le groupe constitué par:
- les alliages à 99% d'aluminium : 1050, 1100, 1200, 1350 ;
- les alliages Al-Mn : 3003, 3004, 3105, 3005 ;
- les alliages Al-Mg : 5005, 5050, 5052 ; et
- les alliages Al-Si-Mg : 6053, 6060, 6063, 6101, 6951.

5. Article culinaire selon l'une quelconque des revendications précédentes, **caractérisé en ce que** la brasure à bas point de fusion est un alliage Zinc-Aluminium.

6. Article culinaire (1) selon l'une quelconque des revendications précédentes, **caractérisé en ce que** la deuxième couche (32) du fond rapporté (3) est en un matériau ferromagnétique.

7. Article culinaire (1) selon la revendication 6, **caractérisé en ce que** le matériau ferromagnétique est en acier inoxydable ferritique.

8. Article culinaire (1) selon l'une quelconque des revendications précédentes, **caractérisé en ce que** la deuxième couche (32) du fond rapporté (3) est soudée à la première couche (31) dudit fond (3) à l'aide d'une brasure (6) à point de fusion élevé.

9. Article culinaire (1) selon l'une quelconque des revendications 1 à 6, **caractérisé en ce que** les première (31) et deuxième (32) couches du fond rapporté (3) sont colaminées.

10. Procédé de fabrication d'un fond renforcé (3) d'article culinaire (1), **caractérisé en ce qu'**il comporte les étapes suivantes :
- fournir une forme (2) en fonte d'aluminium ;
- fournir une première plaque (31) en un matériau apte à être brasé sur de la fonte d'aluminium à une température égale ou inférieure à 500°C ;
- fournir une deuxième plaque (32) en un matériau compatible avec un chauffage par induction ;
- assembler la première plaque (31) avec la deuxième plaque (32) pour former un bloc (3) (3) ;
- assembler ledit bloc (3) par brasage tendre dudit matériau apte à être brasé sur de la fonte d'aluminium avec la paroi de fond (21) de la calotte (2), à l'aide d'une brasure (5) à bas point de fusion.

11. Procédé selon la revendication 10, **caractérisé en ce que** la forme (2) est une calotte.

12. Procédé selon la revendication 10 ou 11, **caractérisé en ce que** la brasure à bas point de fusion est un alliage Zn-Al.

13. Procédé selon l'une quelconque des revendications 10 à 12, **caractérisé en ce que** la deuxième plaque (32) est assemblée à la première plaque (31) par colaminage.

14. Procédé selon l'une quelconque des revendications 10 à 12, **caractérisé en ce que** la deuxième plaque (32) est assemblée à la première plaque (31) par brasage dur à l'aide d'une brasure à point de fusion élevé.

## Claims

1. A cooking vessel (1) compatible with heating by induction comprising:
- a metal cap (2) having a bottom wall (21) for the vessel (1), and
- an added-on base (3) compatible with heating by induction, which is positioned on said metal cap (2) locally in the location of its bottom wall (21), said added-on base (3) including:
- a first layer (31) covering at least partly said bottom wall (21), and
- a second layer (32) in a material compatible with heating by induction, covering said first layer (31),
**characterized in that** said cap (2) is in cast aluminium, and,
**in that** said first layer (31) is in a material capable of being soldered on cast aluminium at a temperature equal to or less than 500°C, said first layer (31) being bound to the bottom wall (21) by a low melting point solder (5).

2. The cooking vessel (1) according to claim 1, **characterized in that** said first layer (31) is in a material having heat conductivity equal to or greater than 100 W.m⁻¹.K⁻¹.

3. The cooking vessel (1) according to claim 1 or 2, **characterized in that** the first layer (31) is in a material selected from copper and aluminium alloys.

4. The cooking vessel (1) according to claim 3, **characterized in that** the constitutive material of the first layer (31) of the added-on base (3) is an aluminium alloy selected from the group of:
- alloys with 99% aluminium: 1050, 1100, 1200, 1350;
- Al-Mn alloys: 3003, 3004, 3105, 3005;
- Al-Mg alloys: 5005, 5050, 5052, and
- Al-Si-Mg alloys: 6053, 6060, 6063, 6101, 6951,

5. The cooking vessel (1) according to any of the preceding claims, **characterized in that** the low melting point solder is a zinc-aluminium alloy.

6. The cooking vessel (1) according to any of the preceding claims, **characterized in that** the second layer (32) of the added-on base (3) is in ferromagnetic material,

7. The cooking vessel (1) according to claim 6, **characterized in that** the ferromagnetic material is in ferritic stainless steel.

8. The cooking vessel (1) according to any of the preceding claims, **characterized in that** the second layer (32) of the added-on base (3) is soldered to the first layer (31) of said base (3) with a high melting point solder (6).

9. The cooking vessel (1) according to any of claims 1 to 6, **characterized in that** the first (31) and second (32) layers of the added-on base (3) are co-laminated.

10. A method for manufacturing a strengthened base (3) of a cooking vessel (1), **characterized in that** it includes the following steps:
- providing a shape (2) in cast aluminium;
- providing a first plate (31) in a material capable of being brazed on cast aluminium at a temperature equal to or less than 500°C;
- providing a second plate (32) in a material compatible with heating by induction;
- assembling the first plate (31) with the second plate (32) in order to form a block (3);
- assembling said block (3) by soft soldering of said material capable of being brazed on cast aluminium with the bottom wall (21) of the cap (2), with a low melting point solder (5).

11. The method according to claim 10, **characterized in that** the shape (2) is a cap.

12. The method according to claim 10 or 11, **characterized in that** the low melting point solder is a Zn-Al alloy.

13. The method according to any of claims 10 to 12, **characterized in that** the second plate (32) is assembled to the first plate (31) by co-lamination.

14. The method according to any of claims 10 to 12, **characterized in that** the second plate (32) is assembled to the first plate (31) by hard soldering with a high melting point solder.

## Patentansprüche

1. Kochartikel (1), der mit einer Erhitzung mittels Induktion kompatibel ist, umfassend:
- eine Metallschale (2), die eine Bodenwand (21) für den Artikel (1) aufweist, und
- einen angefügten Boden (3), der mit einer Erhitzung mittels Induktion kompatibel ist, der unter der Metallschale (2) angeordnet ist, lokal an der Stelle seiner Bodenwand (21), wobei der angefügte Boden (3) umfasst:
- eine erste Schicht (31), welche wenigstens teilweise die Bodenwand (21) überdeckt, und
- eine zweite Schicht (32) aus einem mit einer Erhitzung mittels Induktion kompatiblen Material, welche die erste Schicht (31) überdeckt,
**dadurch gekennzeichnet, dass** die Schale (2) aus Aluminiumguss ist, und
dass die erste Schicht (31) aus einem Material ist, das so ausgelegt ist, dass dieses auf den Aluminiumguss mit einer Temperatur gleich oder kleiner 500°C gelötet werden kann, wobei die erste Schicht (31) mit der Bodenwand (21) durch ein niedrig schmelzendes Lötmittel (5) verbunden ist.

2. Kochartikel (1) nach Anspruch 1, **dadurch gekennzeichnet, dass** die erste Schicht (31) aus einem Material ist, das eine Wärmeleitfähigkeit gleich oder größer als 100 W.m⁻¹K⁻¹ aufweist.

3. Kochartikel (1) nach Anspruch 1 oder 2, **dadurch gekennzeichnet, dass** die erste Schicht (31) aus einem Material ist, ausgewählt aus Kupfer und Aluminiumlegierungen.

4. Kochartikel (1) nach Anspruch 3, **dadurch gekennzeichnet, dass** der Werkstoff der ersten Schicht (31) des angefügten Bodens (3) eine Aluminiumlegierung ist, ausgewählt aus der Gruppe bestehend aus:
- Legierungen mit 99% Aluminium: 1050, 1100, 1200, 1350;
- AL-Mn Legierungen: 3003, 3004, 3105, 3005;
- AL-Mg Legierungen: 5005, 5050, 5052; und
- AL-Si-Mg Legierungen: 6053, 6060, 6063, 6101, 6951.

5. Kochartikel nach einem der vorhergehenden Ansprüche, **dadurch gekennzeichnet, dass** das niedrig schmelzende Lötmittel eine Zink-Aluminiumlegiemng ist.

6. Kochartikel (1) nach einem der vorhergehenden Ansprüche, **dadurch gekennzeichnet, dass** die zweite Schicht (32) des angefügten Bodens (3) aus einem ferromagnetischen Material ist.

7. Kochartikel (1) nach Anspruch 6, **dadurch gekennzeichnet, dass** das ferromagnetische Material ein rostfreier ferritischer Stahl ist.

8. Kochartikel (1) nach einem der vorhergehenden Ansprüche, **dadurch gekennzeichnet, dass** die zweite Schicht (32) des angefügten Bodens (3) an die erste Schicht (31) des Bodens (3) mithilfe eines Lötmittels (6) mit erhöhtem Schmelzpunkt angelötet wird.

9. Kochartikel (1) nach einem der Ansprüche 1 bis 6, **dadurch gekennzeichnet, dass** die erste (31) und zweite (32) Schicht des angefügten Bodens (3) colaminiert sind.

10. Verfahren zur Herstellung eines verstärken Bodens (3) eines Kochartikel (1), **dadurch gekennzeichnet, dass** dieses die folgenden Schritte umfasst:
- Bereitstellen einer Form (2) aus Aluminiumguss;
- Bereitstellen einer ersten Platte (31) aus einem Material, das so ausgelegt ist, dass dieses auf den Aluminiumguss mit einer Temperatur gleich oder kleiner als 500°C gelötet werden kann;
- Bereitstellen einer zweiten Platte (32) aus einem Material, das mit einer Erhitzung mittels Induktion kompatibel ist;
- Zusammenbauen der ersten Platte (31) mit der zweiten Platte (32), um einem Block (3) (3) zu bilden;
- Zusammenbauen des Blocks (3) durch Weichlötung des Materials, das so ausgelegt ist, dass dieses an den Aluminiumguss angelötet werden kann, mit der Bodenwand (31) der Schale (2), mithilfe eines niedrig schmelzenden Lötmittels (5).

11. Verfahren nach Anspruch 10, **dadurch gekennzeichnet, dass** die Form (2) eine Schale ist.

12. Verfahren nach Anspruch 10 oder 11, **dadurch gekennzeichnet, dass** das niedrig schmelzende Lötmittel eine Zn-Al Legierung ist.

13. Verfahren nach einem der Ansprüche 10 bis 12, **dadurch gekennzeichnet, dass** die zweite Platte (32) mit der ersten Platte (31) durch Colaminierung zusammengebaut wird.

14. Verfahren nach einem der Ansprüche 10 bis 12, **dadurch gekennzeichnet, dass** die zweite Platte (32) mit der ersten Platte (31) durch Hartlötung mithilfe eines Lötmittels mit erhöhtem Schmelzpunkt zusammengebaut wird.
